# EUROPÄISCHE PATENTANMELDUNG

(11) **EP 2 426 547 A1**
(43) Veröffentlichungstag der Anmeldung: **07.03.2012**
(21) Anmeldenummer: 11178502.8
(22) Anmeldetag: 23.08.2011
(51) Int. Cl.: G02C 11/00, G02C 5/14

(54) **Magnetbrille**

(30) Priorität: 01.09.2010 DE 202010012083 U
(71) Anmelder: Energetix GmbH & Co. KG, 55411 Bingen (DE)
(72) Erfinder: Förster, Roland, 55413 Weiler-Bingen (DE)
(74) Vertreter: WSL Patentanwälte Partnerschaftsgesellschaft

(57) **Zusammenfassung**

Die vorliegende Erfindung betrifft eine Vorrichtung, mit der zumindest teilweise magnetische Körper oder ein Ionen-emittierendes Material im Kopfbereich angeordnet werden können. Hierfür wird erfindungsgemäß ein Brillenbügel (1) zum Anordnen einer Brillenglasfassung (2) am Kopf einer Person in einer Trageposition vorgeschlagen, wobei der Brillenbügel (1) einen Befestigungsabschnitt (3) zum Befestigen des Brillenbügels (1) an der Brillenglasfassung (2), einen Halteabschnitt (5) zum Halten des Brillenbügels (1) am Kopf der Person und einen sich zwischen dem Befestigungsabschnitt (3) und dem Halteabschnitt (5) erstreckenden Verbindungsabschnitt (4) aufweist, und wobei der Brillenbügel wenigstens im Bereich des Halteabschnittes und/oder im Bereich des Verbindungsabschnittes ein magnetisches Material oder ein Ionen-emittierendes Material aufweist.

## Beschreibung

Die vorliegende Erfindung betrifft einen Brillenbügel zum Anordnen einer Brillenglasfassung am Kopf einer Person in einer Trageposition, wobei der Brillenbügel einen Befestigungsabschnitt zum Befestigen des Brillenbügels an der Brillenglasfassung, einen Halteabschnitt zum Halten des Brillenbügels am Kopf der Person und einen sich zwischen dem Befestigungsabschnitt und dem Halteabschnitt erstreckenden Verbindungsabschnitt aufweist.

Vorgenannte Brillenbügel sind Teil herkömmlicher Brillen, die beispielsweise als Sehhilfen, Schutzbrillen und/oder als modisches Accessoire verwendet werden. Der Brillenbügel ist mit einem Befestigungsabschnitt an der Brillenglasfassung befestigt. Zusätzlich weist ein solcher Brillenbügel einen Verbindungsabschnitt auf, der mit dem Halteabschnitt des Brillenbügels verbunden ist. Der Halteabschnitt dient zum Anordnen des Brillenbügels am Kopf einer Person, so dass der Brillenbügel und die damit verbundene Brillenglasfassung am Kopf der Person in einer Trageposition gehalten wird.

Magnete und Ionen-emittierende Stoffe sollen positiven Einfluss auf den Blutfluss im Körper haben. Die Verwendung von sogenanntem herkömmlichen Magnetschmuck, wie z. B. Ringe und Ketten, weisen jedoch den Nachteil auf, dass die Magnetkörper nicht ohne weiteres am Kopf getragen werden können. Der positive Einfluss der magnetischen Materialien wirkt sich daher nur eingeschränkt auf den Kopfbereich aus.

Es besteht daher ein Bedarf nach einer Vorrichtung, mit der ein zumindest teilweise magnetischer Körper oder ein Ionen-emittierendes Material im Kopfbereich angeordnet werden kann.

Diese Aufgabe wird erfindungsgemäß durch einen Brillenbügel der eingangs genannten Art gelöst, der dadurch gekennzeichnet ist, dass der Brillenbügel wenigstens im Bereich des Halteabschnittes und/oder im Bereich des Verbindungsabschnittes ein magnetisches Material oder ein Ionen-emittierendes Material aufweist.

Ionen-emittierendes Material im Sinne der vorliegenden Erfindung umfasst insbesondere Negativionen emittierende oder erzeigende Materialien. Negativionen gelten als gesundheitsfördernd. Ihnen wird zugeschrieben, dass sie die Beförderung von Sauerstoff im Blut beschleunigen. Erfindungsgemäß bevorzugte Beispiele für Negativionen emittierende oder erzeugende Materialien sind elementares Germanium, Basislegierungen des Germaniums und auch Silikatmineralien, insbesondere Turmaline. Wenn hierin nachfolgend von magnetischem Material die Rede ist, so gelten die Ausführungen dazu entsprechend auch für Ionen-emittierendes Material im Sinne der Erfindung, auch wenn es nicht an jeder Stelle ausdrücklich genannt ist.

Der Befestigungsabschnitt des Brillenbügels kann eine Befestigungsvorrichtung zum Befestigen des Brillenbügels an der Brillenglasfassung aufweisen. Brillenbügel, die mit einer solchen Befestigungsvorrichtung einer Brillenglasfassung befestigt sind, können ausgetauscht werden. Zudem besteht die Möglichkeit, den Brillenbügel an der Brillenglasfassung klappbar zu befestigen. Mit einem Klappmechanismus kann der Brillenbügel relativ zu der Brillenglasfassung für beispielsweise Transport- und/oder Lagerungszwecke eingeklappt werden, um so die Brillenglasfassung bzw. auch den Bügel vor Schäden zu schützen.

Alternative Befestigungsmechanismen sind davon nicht ausgeschlossen, so kann beispielsweise in einer Ausführungsform der Befestigungsabschnitt mit der Brillenglasfassung unlösbar, beispielsweise durch Verkleben, verbunden sein.

In einer Ausführungsform ist vorgesehen, dass das magnetische Material in Form eines magnetischen Einsatzes in einem allseits geschlossenen Hohlraum oder in einer wenigstens einseitig offenen Ausnehmung des Brillenbügels angeordnet ist. Durch einen allseits geschlossenen Hohlraum kann beispielsweise verhindert werden, dass der magnetische Einsatz verloren geht.

Ist der magnetische Einsatz in einer sonstigen Weise in einer wenigstens einseitig offenen Ausnehmung des Brillenbügels angeordnet, so werden die magnetischen Wirkungslinien zumindest in Richtung der Öffnung der Ausnehmung nicht durch das Material des Brillenbügels geschwächt.

Das magnetische Material kann auch in einem allseits geschlossenen oder einseitig offenen Hohlkörper, wie beispielsweise eine Kapsel oder einen Tiegel, eingebracht sein. Der Hohlkörper kann seinerseits von einer Ausnehmung des Brillenbügels aufgenommen werden. Dabei kann die Ausnehmung zur Aufnahme des Hohlkörpers insbesondere im Bereich des Verbindungsabschnittes oder des Halteabschnittes angeordnet sein.

Um den Austausch des magnetischen Materials zu ermöglichen ist in einer Ausführungsform der Hohlkörper reversibel verschließbar, so dass dieser geöffnet und verschlossen werden kann, wobei durch die Öffnung des Hohlkörpers das magnetische Material aus dem Hohlkörper entnommen bzw. in den Hohlkörper eingebracht werden kann.

In einer Ausführungsform ist vorgesehen, dass das der Hohlkörper reversibel in einer Ausnehmung des Brillenbügels angeordnet ist, so dass der Hohlkörper durch Entnahme und Einsetzen ausgetauscht werden kann.

Es versteht sich, dass die Geometrie des Hohlkörpers, des magnetischen Materials und die Ausnehmung zur Aufnahme des Hohlkörpers aufeinander abgestimmt sein können.

Mit anderen Worten kann der Brillenbügel eine Ausnehmung aufweisen, in die eine Einsteckhülse einsteckbar ist, die in Größe und Form so gestaltet ist, dass durch deren Hülsenöffnung ein magnetischer Körper in die Einsteckhülse eingebracht werden kann. Ein so in den Brillenbügel integrierter magnetischer Körper kann durch Auswechseln der Einsteckhülse oder durch Austauschen des magnetischen Körpers in der Einsteckhülse gewechselt werden.

In einer bevorzugten Ausführungsform ist das magnetische Material vom übrigen Material des Brillenbügels vollständig umschlossen und kann beispielweise in einen Bügel aus Kunststoff eingegossen sein. Es versteht sich, dass neben Kunststoff auch andere Metalle, insbesondere Edelmetalle, als Material für den Brillenbügel bzw. dessen Abschnitte verwendet werden können.

Damit der magnetische Einsatz austauschbar ist, ist in einer Ausführungsform wenigstens eine einseitige offene Ausnehmung vorgesehen, durch dessen Öffnung der magnetische Einsatz in die Ausnehmung eingebracht werden kann.

Wahlweise kann wenigstens ein Abschnitt des Brillenbügels wenigstens abschnittsweise aus einem magnetischem Material hergestellt sein. Beispielweise ist in einer Ausführungsform der Halteabschnitt zumindest teilweise aus einem magnetischen Material gefertigt. Denkbar ist auch, dass der Brillenbügel an sich einstückig aus einem magnetischen Material hergestellt ist.

In einer Ausführungsform ist der erfindungsgemäße Brillenbügel derart ausgestaltet, dass das magnetische Material auf der dem Kopf zugewandten Seite des Brillenbügels frei liegt. Alternativ ist eine Ausführungsform vorgesehen, bei der das magnetische Material auf der vom Kopf abgewandten Seite des Brillenbügels frei liegt.

In einer Ausführungsform ist das magnetische Material im Bereich des Verbindungsabschnittes des Brillenbügels angeordnet.

Wahlweise kann in einer Ausführungsform das magnetische Material im Bereich des Halteabschnittes des Brillenbügels angeordnet sein.

Dies schließt nicht aus, dass wie in einer Ausführungsform vorgesehen das magnetische Material im Bereich des Verbindungsabschnittes und im Bereich des Halteabschnittes des Brillenbügels angeordnet ist.

Denkbar sind auch solche Ausführungsformen, bei der der Brillenbügel zwei, drei oder mehr magnetische Einsätze aufweist.

Vorgesehen ist auch ein Brillengestell mit einer Brillenglasfassung und mit zwei an der Brillenglasfassung angeordneten Brillenbügeln, die jeweils einen Befestigungsabschnitt zum Befestigen des Brillenbügels an der Brillenglasfassung, einen Halteabschnitt zum Halten des Brillenbügels am Kopf der Person und einen sich zwischen dem Befestigungsabschnitt und dem Halteabschnitt erstreckenden Verbindungsabschnitt aufweist, wobei wenigstens einer der Brillenbügel ein Brillenbügel mit den vorgenannten erfindungsgemäßen Merkmalen ist.

In einer Ausführungsform das Brillengestellt mit wenigstens einem erfindungsgemäßen Brillenbügel derart an der Brillenglasfassung befestigt ist, dass der Befestigungsabschnitt des Brillenbügels und die Brillenglasfassung aus einem nahtlos ineinander übergehenden Material bestehen.

Weitere Vorteile, Merkmale und Anwendungsmöglichkeiten der vorliegenden Erfindung werden deutlich anhand der folgenden Beschreibung bevorzugter Ausführungsformen sowie der dazugehörigen Figuren.

Es zeigen:
- Figur 1: eine Seitenansicht eines erfindungsgemäßen Brillenbügels,
- Figur 2: eine Ausführungsform eines Brillenbügels der vorliegenden Erfindung,
- Figur 3: eine weitere Ausführungsform des erfindungsgemäßen Brillenbügels,
- Figur 4: eine schematische Darstellung einer erfindungsgemäßen Brillenglasfassung,
- Figur 5: eine weitere Ausführungsform einer Brillenglasfassung gemäß der vorliegenden Erfindung.

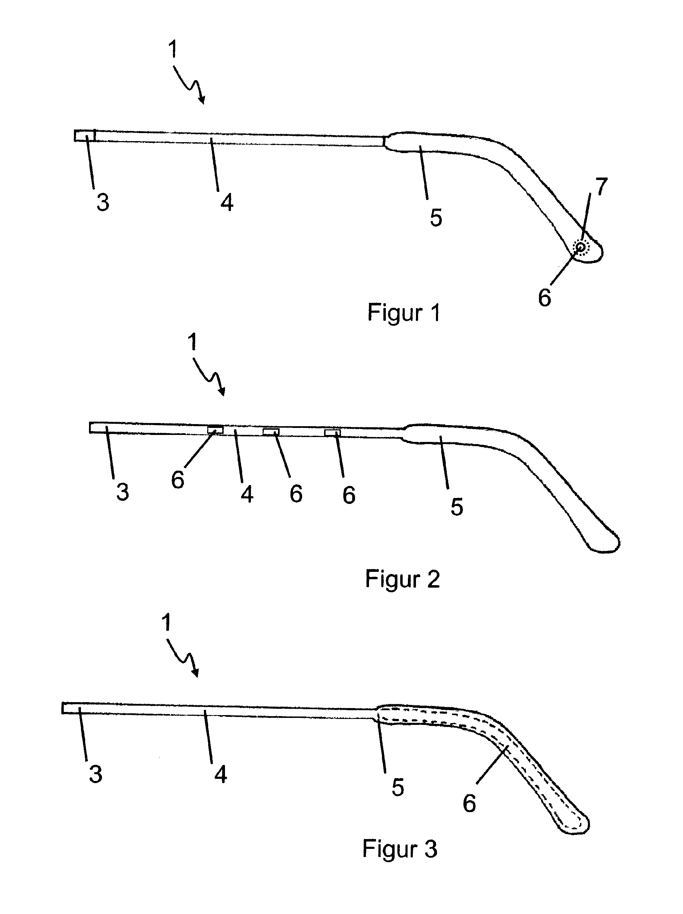

In Figur 1 dargestellt ist ein Brillenbügel 1 der vorliegenden Erfindung. Der Brillenbügel 1 weist einen Befestigungsabschnitt 3 auf, der zum Befestigen des Brillenbügels 1 an einer Brillenglasfassung (in Figur 1 nicht dargestellt) vorgesehen ist. Des weiteren weist der Brillenbügel 1 einen Verbindungsabschnitt 4 und einen Halteabschnitt 5 auf, wobei der Verbindungsabschnitt 4 zwischen dem Befestigungsabschnitt 3 und dem Halteabschnitt 5 angeordnet ist. In dem Bereich des Halteabschnitts 5 ist ein Hohlraum 7 vorgesehen, in den ein magnetisches Material, beispielsweise in Form eines magnetischen Einsatzes 6, eingelassen ist. Sowohl der Hohlraum 7 als auch der magnetische Einsatz 6 sind bei dieser Ausführungsform zylinderförmig ausgestaltet. Es versteht sich, dass andere geometrische Formen des Hohlraums 7 oder des magnetischen Einsatzes 6 davon nicht ausgeschlossen sind.

Der Befestigungsabschnitt 3 kann eine Befestigungsvorrichtung zum Befestigen des Brillenbügels 1 an einer Brillenglasfassung 2 aufweisen, so dass der Brillenbügel 1 klappbar an einer Brillenglasfassung befestigt ist.

Der in Figur 2 dargestellte Brillenbügel 1 weist einen Befestigungsabschnitt 3, einen Verbindungsabschnitt 4 und einen Halteabschnitt 5 auf, wobei der Befestigungsabschnitt 3, der Verbindungsabschnitt 4 und der Halteabschnitt 5 einstückig ausgeführt sind. Der Verbindungsabschnitt 4 weist drei voneinander unabhängige magnetische Einsätze 6 auf, die hier eine rechteckige Form aufweisen. Andere geometrische Formen der magnetischen Einsätze 6 sind davon nicht ausgeschlossen.

Der einstückig ausgeführte Brillenbügel 1 und auch alle anderen erfindungsgemäßen Brillenbügel können mit einer Brillenglasfassung verklebt oder ebenfalls einstückig mit dieser ausgeführt sein.

Die Figur 3 zeigt einen weiteren erfindungsgemäßen Brillenbügel 1 mit einem Befestigungsabschnitt 3, einen Verbindungsabschnitt 4 und einen Halteabschnitt 5. In das Material des Halteabschnittes 5 ist ein Magneteinsatz 6 eingelassen, wobei der magnetische Einsatz 6 vollständig von dem Material des Halteabschnittes 5 umschlossen ist. Die Form des magnetischen Einsatzes 6 ist an die Form des Halteabschnittes 5 angepasst.

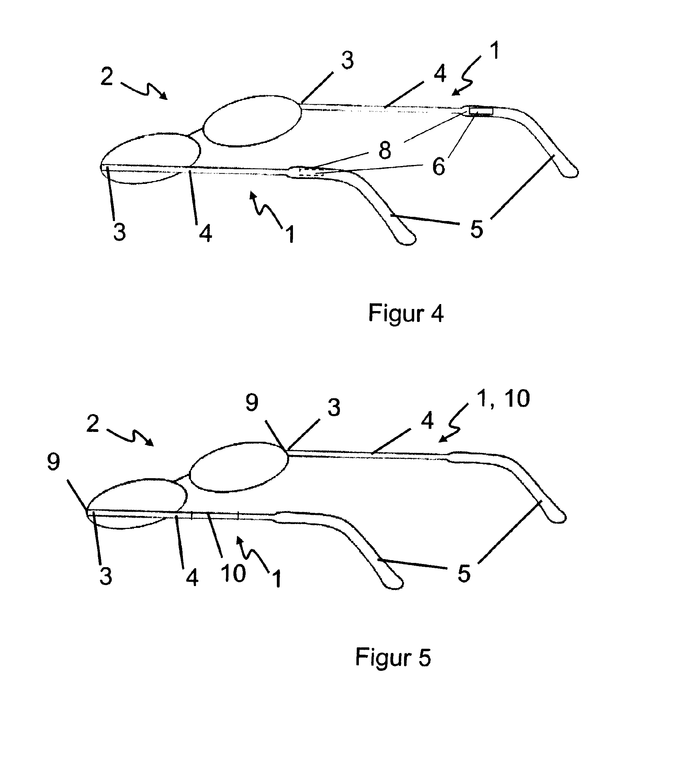

In Figur 4 ist eine Brillenglasfassung 2 mit zwei erfindungsgemäßen Brillenbügeln 1 dargstellt. Jeder der Brillenbügel 1 weist einen Befestigungsabschnitt 3, einen Verbindungsabschnitt 4 und einen Halteabschnitt 5 auf. Die Halteabschnitte 5 zeigen je eine wenigstens einseitige offene Ausnehmung, wobei die Öffnung der Ausnehmung 8 auf der dem Kopf zugewandten Seite des Brillenbügels 1 angeordnet ist. Entsprechend der Erfindung kann die Öffnung jedoch auch der vom Kopf abgewandten Seite des Brillenbügels 1 liegen. Alternativ kann die Ausnehmung 8 sowohl auf der dem Kopf zugewandten Seite als auch auf der vom Kopf abgewandten Seite des Brillenbügels 1 je eine Öffnung aufweisen.

Die in Figur 5 dargestellte Brillenglasfassung 2 weist zwei Brillenbügel 1 auf, die austauschbar mit einer an dem Befestigungsabschnitt 3 angeordneten Befestigungsvorrichtung 9 an der Brillenglasfassung 2 befestigt sind. Es ist somit möglich, einzelne Brillenbügel 1 von der Brillenglasfassung 2 zu lösen und durch andere Brillenbügel zu ersetzen. In Figur 5 weist die Brillenglasfassung 2 einen Brillenbügel 1 auf, der einen Befestigungsabschnitt 3, einen Verbindungsabschnitt 4 und einen Halteabschnitt 5 hat. Der Verbindungsabschnitt 4 ist abschnittsweise aus einem magnetischen Material 10 hergestellt.

Der gegenüberliegende Brillenbügel 1 weist ebenfalls einen Befestigungsabschnitt 3, einen Verbindungsabschnitt 4 und einen Halteabschnitt 5 auf, wobei der Brillenbügel 1 einstückig ausgeführt und aus einem magnetischen Material hergestellt ist.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichenliste

- 1: Brillenbügel
- 2: Brillenglasfassung
- 3: Befestigungsabschnitt
- 4: Verbindungsabschnitt
- 5: Halteabschnitt
- 6: magnetischer Einsatz
- 7: Hohlraum
- 8: Ausnehmung
- 9: Befestigungsvorrichtung
- 10: magnetisches Material

## Patentansprüche

1. Brillenbügel (1) zum Anordnen einer Brillenglasfassung (2) am Kopf einer Person in einer Trageposition, wobei der Brillenbügel (1) einen Befestigungsabschnitt (3) zum Befestigen des Brillenbügels (1) an der Brillenglasfassung (2), einen Halteabschnitt (5) zum Halten des Brillenbügels (1) am Kopf der Person und einen sich zwischen dem Befestigungsabschnitt (3) und dem Halteabschnitt (5) erstreckenden Verbindungsabschnitt (4) aufweist, **dadurch gekennzeichnet, dass** der Brillenbügel (1) wenigstens im Bereich des Halteabschnitts (5) und/oder im Bereich des Verbindungsabschnitts (4) ein magnetisches Material (10) oder ein Ionen-emittierendes Material aufweist.

2. Brillenbügel (1) nach Anspruch 1, **dadurch gekennzeichnet, dass** das magnetische Material (10) oder Ionen-emittierende Material in Form eines Einsatzes (6) vorgesehen ist, der in einem allseits geschlossenen Hohlraum (7) oder in einer wenigstens einseitig offenen Ausnehmung (8) des Brillenbügels (1) angeordnet ist.

3. Brillenbügel (1) nach Anspruch 1 oder 2, **dadurch gekennzeichnet, dass** das magnetische Material (10) oder Ionen-emittierende Material auf der dem Kopf zugewandten Seite des Brillenbügels (1) freiliegt.

4. Brillenbügel (1) nach einem der Ansprüche 1 bis 3, **dadurch gekennzeichnet, dass** das magnetische Material (10) oder Ionen-emittierende Material auf der vom Kopf abgewandten Seite des Brillenbügels (1) freiliegt.

5. Brillenbügel (1) nach einem der Ansprüche 1 bis 4, **dadurch gekennzeichnet, dass** das magnetische Material (10) oder Ionen-emittierende Material im Bereich des Verbindungsabschnittes (4) angeordnet ist.

6. Brillenbügel (1) nach einem der Ansprüche 1 bis 5, **dadurch gekennzeichnet, dass** das magnetische Material (10) oder Ionen-emittierende Material im Bereich des Halteabschnittes (5) angeordnet ist.

7. Brillenbügel (1) nach einem der Ansprüche 1 bis 6, **dadurch gekennzeichnet, dass** das magnetische Material (10) oder Ionen-emittierende Material im Bereich des Verbindungsabschnittes (4) und im Bereich des Halteabschnittes (5) angeordnet ist.

8. Brillenbügel (1) nach einem der Ansprüche 1 bis 7, **dadurch gekennzeichnet, dass** der Brillenbügel (1) zwei, drei oder mehr Einsätze (6) mit magnetischem Material (10) oder Ionen-emittierendem Material aufweist.

9. Brillenbügel (1) nach einem der Ansprüche 1 bis 8, **dadurch gekennzeichnet, dass** das Ionen-emittierende Material elementares Germanium, Basislegierung des Germaniums oder Turmalin ist.

10. Brillengestell mit einer Brillenglasfassung (2) und mit zwei an der Brillenglasfassung (2) angeordneten Brillenbügeln (1), die jeweils einen Befestigungsabschnitt (3) zum Befestigen des Brillenbügels (1) an der Brillenglasfassung (2), einen Halteabschnitt (5) zum Halten des Brillenbügels (1) am Kopf der Person und einen sich zwischen dem Befestigungsabschnitt (3) und dem Halteabschnitt (5) erstreckenden Verbindungsabschnitt (4) aufweisen, **dadurch gekennzeichnet, dass** wenigstens einer der Brillenbügel (1) ein Brillenbügel (1) nach einem der Ansprüche 1 bis 9 ist.

11. Brillengestell nach Anspruch 10, **dadurch gekennzeichnet, dass** der Brillenbügel (1) nach einem der Ansprüche 1 bis 8 dadurch an der Brillenglasfassung (2) befestigt ist, dass der Befestigungsabschnitt (3) des Brillenbügels (1) und die Brillenglasfassung (2) aus einem nahtlos ineinander übergehenden Material bestehen.
